# EUROPEAN PATENT APPLICATION

(11) **EP 4 715 650 A1**
(43) Date of publication of application: **25.03.2026**
(21) Application number: 24830967.6
(22) Date of filing: 28.06.2024
(51) Int. Cl.: G06F 21/62

(54) **METHOD AND SYSTEM FOR GENERATING CONTENT BY USING MODEL, AND CLUSTER**

(30) Priority: 28.06.2023 CN 202310777021; 20.09.2023 CN 202311218468
(71) Applicant: Huawei Cloud Computing Technologies Co., Ltd., Guiyang, Guizhou, 550025 (CN)
(72) Inventor: SU, Guoxiong, Guiyang, Guizhou 550025 (CN); WEI, Zhian, Guiyang, Guizhou 550025 (CN)
(74) Representative: Goddar, Heinz J.
(86) International application number: PCT/CN2024/102331
(87) International publication number: WO 2025/002338

(57) **Abstract**

A method and system for generating content by using a model, and a cluster are provided and may be applied to the field of cloud computing technologies. The method includes: A client receives a content generation instruction sent by a user, where the content generation instruction instructs a model to generate target content based on an intention of the user. The client inputs the content generation instruction into a first module, to enable the first module to output an intermediate result of generating the target content by the model. A serving end receives the intermediate result sent by the client, and inputs the intermediate result into a second module, to enable the second module to output the target content. The serving end sends the target content to the client. The method can prevent a cloud from obtaining sensitive information of the user in the content generation instruction, and protecting information security of the user.

## Description

This application claims priorities to Chinese Patent Application No. 202310777021.3, filed with the China National Intellectual Property Administration on June 28, 2023 and entitled "COMMAND TRANSMISSION METHOD", and to Chinese Patent Application No. 202311218468.3, filed with the China National Intellectual Property Administration on September 20, 2023 and entitled "METHOD AND SYSTEM FOR GENERATING CONTENT BY USING MODEL, SYSTEM, AND CLUSTER", both of which are incorporated herein by reference in their entireties.

### TECHNICAL FIELD

This application relates to the field of cloud computing (cloud computing) and artificial intelligence (artificial intelligence, AI) technologies, and in particular, to a method and system for generating content by using a model, and a cluster.

### BACKGROUND

Artificial intelligence-generated content (AI-generated content, AIGC) is a technology for generating digital content (for example, pictures, audios, and texts) by using an AI model. The AI model used to generate the digital content may be referred to as a generative model (generative model, GM). With development of the generative model, a common user may generate high-quality content by using the AIGC. Therefore, the AIGC has been rapidly applied.

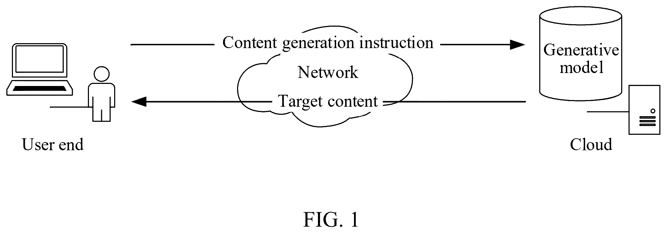

As shown in FIG. 1, a generative model is usually deployed on a cloud because the generative model has a high requirement on computing power. In this way, a user can use a lightweight terminal device to generate content by using the generative model. Specifically, the user uses the terminal device to send a content generation instruction to the generative model on the cloud. The generative model generates, based on the content generation instruction, content that may be expected by the user, that is, target content.

The content generation instruction may include sensitive information of the user. For example, the user may unintentionally include sensitive information such as personal information, trade secrets, or information reflecting a preference of the user in the content generation instruction. Therefore, sending the content generation instruction to the cloud may cause the cloud to obtain the sensitive information of the user, and consequently, the sensitive information of the user is leaked.

### SUMMARY

Embodiments of this application provide a method and system for generating content by using a model, and a cluster, to prevent a cloud from obtaining sensitive information of a user in a content generation instruction, so as to protect information security of the user.

According to a first aspect, a method for generating content by using a model is provided. The method is applied to a system for generating content. The system includes a client and a serving end, and the model includes a first module and a second module. The client and the first module are deployed on a user end, the serving end and the second module are deployed on a cloud, and an output of the first module is an input of the second module. The method includes: The client receives a content generation instruction sent by a user, where the content generation instruction instructs the model to generate target content based on an intention of the user. The client inputs the content generation instruction into the first module, to enable the first module to output an intermediate result of generating the target content by the model. The serving end receives the intermediate result sent by the client, and inputs the intermediate result into the second module, to enable the second module to output the target content. The serving end sends the target content to the client.

In the method, a part of the model used to generate the target content is deployed on the user end, and the other part is deployed on the cloud. When receiving the content generation instruction, the client deployed on the user end may process the content generation instruction by using a locally deployed part of the model, to obtain the intermediate result that is difficult to be used to deduce the content generation instruction. Then, the intermediate result is sent to the cloud, to enable the cloud to generate the target content based on the intermediate result. In this way, leakage of sensitive information in the content generation instruction is avoided while there is no need to run the whole model on the user end.

In a possible implementation, the model is a generative model including a plurality of network layers, and the plurality of network layers are sequentially arranged in a data transfer direction of the generative model. The first module includes at least one of the plurality of network layers, and the second module includes a network layer other than the at least one network layer in the plurality of network layers.

In this implementation, a part of network layers in the generative model may be deployed on the user end, and the other part of network layers are deployed on the cloud. The part of network layers deployed on the user end may process the content generation instruction sent by the user, to obtain the intermediate result of the generative model. Due to unexplainability of the AI model, the intermediate result is difficult to be used to deduce an input of the model, that is, the content generation instruction. Therefore, after obtaining the intermediate result, the cloud is difficult to obtain the content generation instruction of the user, and is difficult to obtain sensitive information that may be included in the content generation instruction.

In a possible implementation, the content generation instruction includes the intention of the user, and the model includes an interpreter and a generator. The interpreter is configured to extract a feature of the intention of the user, to obtain an encoded vector, and the generator is configured to generate the target content based on the encoded vector. The first module includes the interpreter, and the second module includes the generator. Alternatively, the first module includes a first network layer in the interpreter, and the second module includes a second network layer in the interpreter and the generator, where an output of the first network layer is an input of the second network layer. Alternatively, the first module includes the interpreter and a third network layer in the generator, and the second module includes a fourth network layer in the generator, where an output of the third network layer is an input of the fourth network layer.

In this implementation, the first module includes the interpreter, a partial interpreter, or the whole interpreter and a partial generator. In other words, the first module may be flexibly configured. When computing power of the user end is high, the first module may include the whole interpreter, or the whole interpreter and the partial generator, so that the computing power of the user end can be fully used. In addition, the intermediate result output by the first module is difficult to be used to deduce the content generation instruction. When computing power of the user end is low, the first module may include the partial interpreter, to reduce a requirement on local computing power.

In a possible implementation, the model is the generative model, and the method further includes: The serving end trains the model. The serving end sends the first module to the user end after training of the model is completed.

In this implementation, the model may be trained on the cloud, and after training of the model is completed, the first module in the model is sent to the user end. In this way, the user does not need to train or design the first module, so that user experience is improved.

In a possible implementation, the method further includes: The client receives a parameter adjustment operation sent by the user, and adjusts a parameter of the first module based on the parameter adjustment operation.

In this implementation, the user may adjust or modify the parameter of the first module, so that the parameter of the first module is not perceived by the cloud or in another manner. Therefore, the parameter of the first module cannot be used to deduce the content generation instruction sent by the user.

In a possible implementation, the first module includes a sensitive information filter that is set by the user, and the filter is configured to intercept sensitive information in the content generation instruction, to obtain the intermediate result.

In this implementation, the first module may be implemented as the filter. The filter has a low requirement on computing power, and therefore, the user can use a lightweight local user device to generate content according to the method provided in this embodiment of this application.

According to a second aspect, a system for generating content is provided. The system is configured to generate content by using a model. The system includes a client and a serving end, and the model includes a first module and a second module. The client and the first module are deployed on a user end, the serving end and the second module are deployed on a cloud, and an output of the first module is an input of the second module. The client is configured to receive a content generation instruction sent by a user, where the content generation instruction instructs the model to generate target content based on an intention of the user. The client is configured to input the content generation instruction into the first module, to enable the first module to output an intermediate result of generating the target content by the model. The serving end is configured to: receive the intermediate result sent by the client, and input the intermediate result into the second module, to enable the second module to output the target content. The serving end is configured to send the target content to the client.

In a possible implementation, the model is a generative model including a plurality of network layers, and the plurality of network layers are sequentially arranged in a data transfer direction of the generative model. The first module includes at least one of the plurality of network layers, and the second module includes a network layer other than the at least one network layer in the plurality of network layers.

In a possible implementation, the content generation instruction includes the intention of the user, and the model includes an interpreter and a generator. The interpreter is configured to extract a feature of the intention of the user, to obtain an encoded vector, and the generator is configured to generate the target content based on the encoded vector. The first module includes the interpreter, and the second module includes the generator. Alternatively, the first module includes a first network layer in the interpreter, and the second module includes a second network layer in the interpreter and the generator, where an output of the first network layer is an input of the second network layer. Alternatively, the first module includes the interpreter and a third network layer in the generator, and the second module includes a fourth network layer in the generator, where an output of the third network layer is an input of the fourth network layer.

In a possible implementation, the model is the generative model, and the serving end is further configured to: train the model, and send the first module to the user end after training of the model is completed.

In a possible implementation, the client is further configured to: receive a parameter adjustment operation sent by the user, and adjust a parameter of the first module based on the parameter adjustment operation.

In a possible implementation, the first module includes a sensitive information filter that is set by the user, and the filter is configured to intercept sensitive information in the content generation instruction, to obtain the intermediate result.

According to a third aspect, a method for generating content by using a model is provided. The method is applied to a client deployed on a user end. A system for generating content in which the client is located further includes a serving end deployed on a cloud, and the model includes a first module and a second module. The first module is deployed on the user end, the second module is deployed on the cloud, and an output of the first module is an input of the second module. The method includes: The client receives a content generation instruction sent by a user, where the content generation instruction instructs the model to generate target content based on an intention of the user. The client inputs the content generation instruction into the first module, to enable the first module to output an intermediate result of generating the target content by the model. The client sends the intermediate result to the serving end, where the serving end is configured to input the intermediate result into the second module, to enable the second module to output the target content. The client receives the target content sent by the serving end.

In a possible implementation, the method further includes: The client receives a parameter adjustment operation sent by the user, and adjusts a parameter of the first module based on the parameter adjustment operation.

According to a fourth aspect, a client for generating content by using a model is provided. The client is deployed on a user end. A system for generating content in which the client is located further includes a serving end deployed on a cloud, and the model includes a first module and a second module. The first module is deployed on the user end, the second module is deployed on the cloud, and an output of the first module is an input of the second module. The client includes: a receiving module, configured to receive a content generation instruction sent by a user, where the content generation instruction instructs the model to generate target content based on an intention of the user; an input module, configured to input the content generation instruction into the first module, to enable the first module to output an intermediate result of generating the target content by the model; and a communication module, configured to send the intermediate result to the serving end, where the serving end is configured to input the intermediate result into the second module, to enable the second module to output the target content. The communication module is further configured to receive the target content sent by the serving end.

In a possible implementation, the receiving module is further configured to: receive a parameter adjustment operation sent by the user, and adjust a parameter of the first module based on the parameter adjustment operation.

According to a fifth aspect, a computing device cluster is provided. The computing device cluster includes at least one computing device. Each computing device includes a processor and a memory. A processor of the at least one computing device is configured to execute instructions stored in a memory of the at least one computing device, to enable the computing device cluster to perform the method according to the third aspect.

According to a sixth aspect, a computer-readable storage medium is provided. The computer-readable storage medium includes computer program instructions. When the computer program instructions are executed by a computing device cluster, the computing device cluster performs the method according to the third aspect.

According to a seventh aspect, a computer program product including instructions is provided. When the instructions are run by a computer device cluster, the computer device cluster is enabled to perform the method according to the third aspect.

For beneficial effects of the second aspect to the seventh aspect, refer to the foregoing descriptions of the beneficial effects of the first aspect. Details are not described herein again.

### BRIEF DESCRIPTION OF DRAWINGS

FIG. 1 is a diagram of a content generation solution;
FIG. 2 is a diagram of a structure of a generative model;
FIG. 3A is a diagram of a system architecture according to an embodiment of this application;
FIG. 3B is a diagram of a system architecture according to an embodiment of this application;
FIG. 3C is a diagram of a system architecture according to an embodiment of this application;
FIG. 4 is a flowchart of a method for generating content according to an embodiment of this application;
FIG. 5 is a diagram of a module 210 and a module 220 according to an embodiment of this application;
FIG. 6 is a diagram of a module 210 and a module 220 according to an embodiment of this application;
FIG. 7 is a diagram of a module 210 and a module 220 according to an embodiment of this application;
FIG. 8 is a diagram of a module 210 and a module 220 according to an embodiment of this application;
FIG. 9 is a diagram of a structure of a system for generating content according to an embodiment of this application;
FIG. 10 is a flowchart of a method for generating content according to an embodiment of this application;
FIG. 11 is a diagram of a structure of a client according to an embodiment of this application;
FIG. 12 is a diagram of a structure of a computing device according to an embodiment of this application;
FIG. 13 is a diagram of a structure of a computing device cluster according to an embodiment of this application; and
FIG. 14 is a diagram of a structure of a computing device cluster according to an embodiment of this application.

### DESCRIPTION OF EMBODIMENTS

The following describes solutions provided in embodiments of this application with reference to the accompanying drawings. In embodiments of this application, "a plurality of" means two or more.

For ease of understanding of the solutions provided in embodiments of this application, some technical terms that may be used in embodiments of this application are first described before the solutions provided in embodiments of this application are described in detail.

Content generation instruction: The content generation instruction refers to information or a command that is sent by a user and that instructs a generative model to generate content based on an intention of the user. The content generation instruction includes the intention of the user. The intention of the user is used to describe target content (that is, content to be generated). For example, if the user expects to generate a painting about a house with a chimney, the intention of the user may be "draw a house with a chimney."

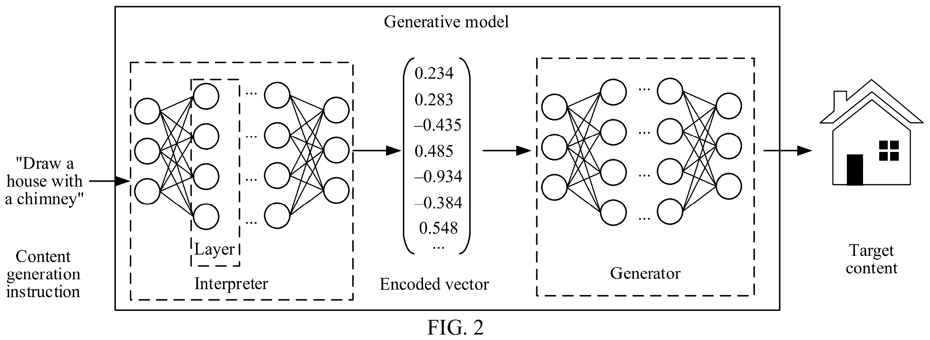

Generative model: The generative model is a neural network used to understand an intention of a user and generate content based on the intention of the user. In other words, the generative model uses a content generation instruction as an input, and outputs content that meets the intention of the user. As shown in FIG. 2, a generative model usually includes an interpreter and a generator. The interpreter is configured to understand an intention of a user that is included in a content generation instruction, in other words, extract a feature of the intention of the user, to obtain an encoded vector of the intention of the user. The encoded vector of the intention of the user is also referred to as a feature vector of the intention of the user. The generator is configured to generate, based on the encoded vector of the intention of the user, knowledge of the generator, and information mastered by the generator, content that meets the intention of the user. As shown in FIG. 2, the interpreter and the generator each include a plurality of network layers arranged in sequence. A network layer may be referred to as a layer for short. An output of each layer is an input of a next layer. Each layer includes a plurality of neurons. Each neuron performs calculation on data by using a parameter, and outputs a calculation result. The calculation result is usually represented by a vector, and may be referred to as the encoded vector. Parameters of the neurons are obtained through training. Training of the model or training of the neural network is essentially training or adjustment of the parameters of the neurons. Currently, typical generative models include a text-to-text transfer transformer (text-to-text transfer transformer, T5), a generative adversarial network (generative adversarial network, GAN), a variational autoencoder (variational autoencoder, VAE), and the like.

Cloud: The cloud is a remote apparatus, device, or platform relative to a user end, which may be specifically one or more servers or computing instances deployed on the cloud, for example, a data center or a server cluster.

User end: The user end is an apparatus, a device, or a platform on a user side, which may be specifically a terminal device of a user, or may be an edge device or a computing instance deployed by a cloud vendor on the user side.

Data masking (data masking): The data masking is to perform data deformation on sensitive information (for example, identity information and asset information) by using a masking rule, to ensure that the sensitive information is not leaked, and implement reliable protection for the sensitive information. The sensitive information may also be referred to as privacy information.

Deep learning (deep learning): The deep learning is a type of machine learning technology based on a deep neural network algorithm. A main feature of the deep learning is to process and analyze data through a plurality of nonlinear transformations. The deep learning is mainly applied to scenarios such as perception, decision-making, and content generation in the artificial intelligence field, for example, image recognition, speech recognition, natural language translation, computer games, and content generation.

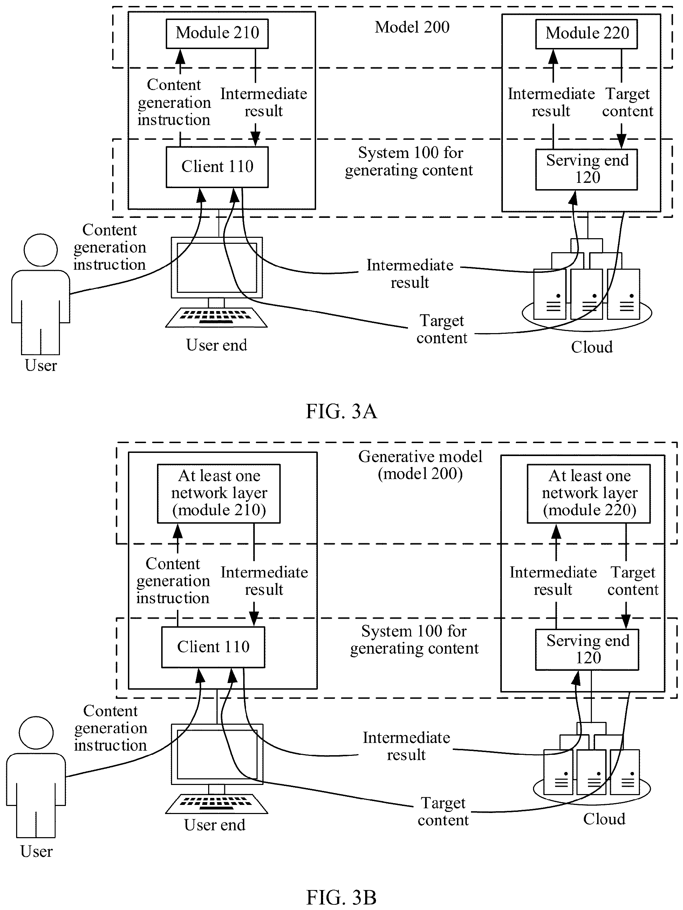

FIG. 3A shows a system architecture according to an embodiment of this application. The system architecture includes a system 100 for generating content and a model 200. The system 100 for generating content includes a client 110 and a serving end 120, and the model 200 includes a module 210 and a module 220. The client 110 and the module 210 are deployed on a user end, and the serving end 120 and the module 220 are deployed on a cloud.

The client 110 may receive a content generation instruction sent by the user, and send the content generation instruction to the module 210. The module 210 may perform data processing on the content generation instruction to obtain an intermediate result. Data processing includes data masking. In other words, the intermediate result is masked data. The client 110 may obtain the intermediate result, and send the intermediate result to the serving end 120 over a network. The serving end 120 inputs the content generation instruction (that is, the intermediate result) sent from the client 110 into the module 220. The module 220 may generate and output target content based on the content generation instruction. The serving end 120 may obtain the target content, and send the target content to the client 110 over the network. The client 110 may display or play the target content to the user.

In this embodiment of this application, the intermediate result is an intermediate result of generating the target content by the model 200. Specifically, a process from inputting the content generation instruction into the model 200 to outputting the target content by the model 200 includes a plurality of processing steps. For example, the model includes a plurality of network layers, and data processing performed by each network layer is one processing step. Except a last processing step in the plurality of processing steps, a processing result of each processing step may be referred to as an intermediate result.

In some embodiments, the client 110 or the serving end 120 may be implemented in a software manner. For example, the client 110 may be an application (application) or a process (process) run on the user end, and the serving end 120 may be an application or a process run on the user end. In some embodiments, the client 110 or the serving end 120 may be implemented in a hardware manner. For example, the client 110 may be a terminal device, and the serving end 120 may be a server or the like. An implementation of the client 110 and the serving end 120 is not specifically limited in this embodiment of this application.

In some embodiments, with reference to FIG. 3B, the model 200 may be a generative model including a plurality of network layers. The plurality of network layers are sequentially arranged in a data transfer direction of the generative model. In other words, an output of one network layer is an input of a next network layer of the network layer. The module 210 includes at least one of the plurality of network layers, and the module 220 includes a network layer other than the at least one network layer in the plurality of network layers. An output of a network layer included in a first module is an input of a network layer included in a second module. In other words, in the data transfer direction of the generative model, the module 220 is a next layer or a plurality of next layers of the module 210. In other words, in this embodiment, a part of the plurality of network layers that are included in the generative model are deployed on the user end, and the other part is deployed on the cloud.

The data transfer direction of the generative model is a transfer direction or a forward direction of data in the generative model in a process from inputting data into the generative model to outputting data by the generative model.

In this embodiment of this application, the generative model may be a text-to-text (text-to-text) content generation model, a text-to-image (text-to-image) content generation model, a text-to-video (text-to-video) content generation model, or a text-to-audio content generation model.

The module 210 uses a content generation instruction as an input, and outputs an encoded vector. The encoded vector is used as an intermediate processing result of an AI model, and is difficult to be used to deduce input information of the AI model. In other words, the encoded vector is an intermediate result of a process in which the generative model generates target content based on the content generation instruction, and is difficult to be used to deduce the content generation instruction input into the generative model. Specifically, the generative model is an AI model obtained through deep learning training, and is unexplainable. Up to now, there is no technology that can be used to deduce an input of the generative model by using an intermediate result or an output of the generative model. Therefore, in this embodiment, on the user end, a part of network layers in the generative model are used to convert a content generation instruction sent by a user into an intermediate result of the generative model, and the intermediate result is sent to the cloud. In this way, the original content generation instruction is not directly sent to the cloud, so that leakage of sensitive information is avoided. In addition, in this embodiment, the content generation instruction is processed by using a computing resource of the user end, to obtain the intermediate result, and the intermediate result is directly used as an input of the module 220 deployed on the cloud, so that the cloud does not need to process the content generation instruction. In this way, a computing resource of the cloud are saved and utilization of the computing resource of the user end is improved.

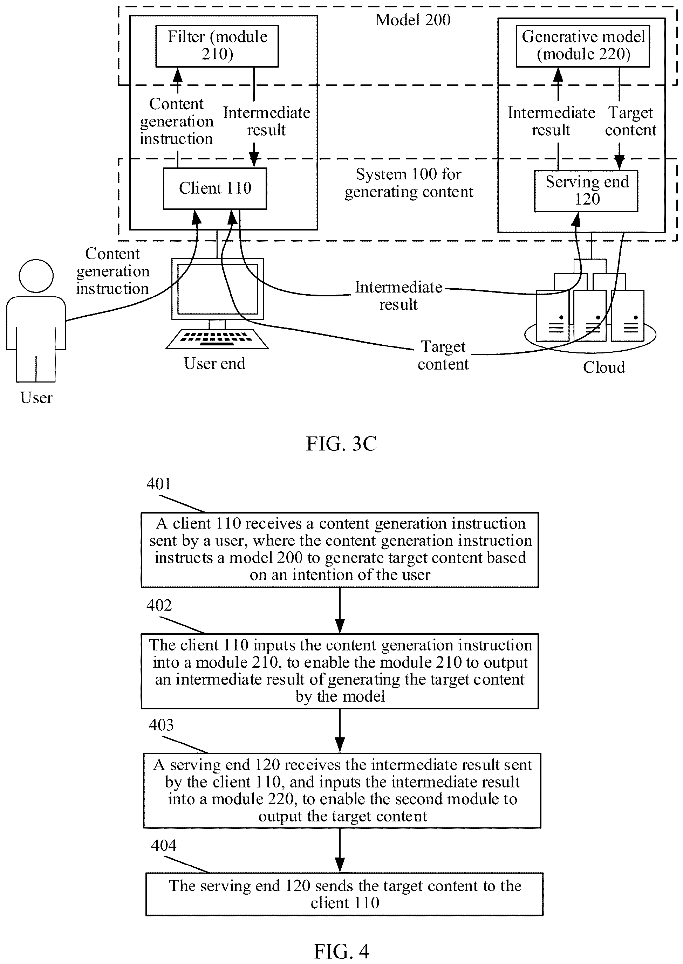

In some embodiments, with reference to FIG. 3C, a model 200 may include a filter and a generative model. The generative model is used as the module 220. The filter is also referred to as a privacy filter, and may be set by a user. The filter is configured to intercept or filter sensitive information in a content generation instruction, to obtain an intermediate result. A masking result herein is also referred to as a masked content generation instruction. In an example, the filter includes a blocklist that is set by the user. The blocklist includes sensitive information listed by the user. If the content generation instruction includes information in the blocklist, the filter intercepts the information in the blocklist from the content generation instruction. In an example, the filter includes a trustlist that is set by the user. The trustlist includes non-sensitive information listed by the user. If the content generation instruction includes information outside the trustlist, the filter intercepts the information outside the trustlist from the content generation instruction. In this embodiment, a neural network that has a high requirement on computing power does not need to be run on the user end, so that the requirement on the computing power on the user end is reduced.

The foregoing examples describe the system architecture provided in embodiments of this application. The following describes, with reference to the system architecture, a method for generating content provided in an embodiment of this application. The method may be specifically performed by the system 100 for generating content. As shown in FIG. 4, the method includes the following steps.

Step 401: A client 110 receives a content generation instruction sent by a user, where the content generation instruction instructs a model 200 to generate target content based on an intention of the user.

The content generation instruction includes the intention of the user. Using text-to-image content generation as an example, the user expects an image about a house with a chimney, and may send a content generation instruction including "draw a house with a chimney". "Draw a house with a chimney" is the intention of the user.

As shown in FIG. 3A, the client 110 is located on a user end, and the user may locally input the content generation instruction into the client 110. This ensures that an original content generation instruction does not leave the user end, and avoids privacy leakage. The original content generation instruction is a content generation instruction that is sent by the user and that has not been processed by a module 210 or the model 200.

In some embodiments, the client 110 may provide a user interface, and the user can enter the content generation instruction through the user interface. For example, the user interface may include an edit box, and the user may enter the content generation instruction into the edit box.

Step 402: The client 110 inputs the content generation instruction into the module 210, to enable the module 210 to output an intermediate result of generating the target content by the model.

As shown in FIG. 3A, the client 110 and the module 210 are both located on the user end. Therefore, the content generation instruction may be input into the module 210 without leaving the user end, that is, the content generation instruction is input into the model 200, so that leakage of user privacy information is avoided.

The module 210 may perform data masking on the content generation instruction, to obtain and output an intermediate result. Sensitive information in the content generation instruction is removed or protected in a masked intermediate result.

In some embodiments, as shown in FIG. 3B, the model 200 is a generative model, and the module 210 is at least one network layer in the generative model. The at least one network layer may process the content generation instruction, to obtain an intermediate result of generating target content by the generative model based on the content generation instruction. A network layer other than the at least one network layer in the plurality of network layers is deployed on a cloud and is used as a module 220.

In an example, the at least one network layer may include an input layer, and the input layer may perform embedding (embedding) on the content generation instruction, to obtain a vector representation form of the content generation instruction, that is, an encoded vector. The encoded vector may be used as the intermediate result output by the module 210.

In an example, the at least one network layer may alternatively include an input layer and a feature extraction layer. The feature extraction layer may perform further calculation on the encoded vector of the content generation instruction, to extract a feature of the content generation instruction, for example, extract a feature of the intention of the user in the content generation instruction, to obtain a feature vector of the content generation instruction. The feature vector is an encoded vector, and is an encoded vector output by the at least one network layer. The feature vector may be used as the intermediate result output by the module 210.

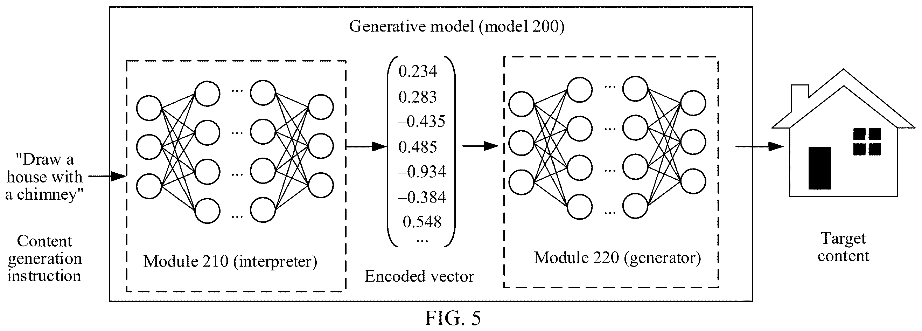

In an example, with reference to FIG. 5, the generative model used as the model 200 includes an interpreter and a generator. The interpreter is configured to understand the intention of the user included in the content generation instruction, to obtain an encoded vector of the intention of the user. The generator is configured to generate, based on the encoded vector of the intention of the user, knowledge of the generator, and information mastered by the generator, content that meets the intention of the user.

In this example, the interpreter is deployed on the user end, and is used as the module 210. The generator is deployed on the cloud, and is used as the module 220. The content generation instruction includes the intention of the user, for example, "draw a house with a chimney". The interpreter used as the module 210 may extract the feature of the intention of the user, to obtain a feature vector of the intention of the user. Extracting the feature of the intention of the user is also referred to as understanding the intention of the user, and the feature vector of the intention of the user may also be referred to as an interpretation result vector. The module 210 may output the interpretation result vector. The interpretation result vector is used as the intermediate result obtained in step 402. The interpretation result vector is an encoded vector, and is specifically an encoded vector output by the interpreter.

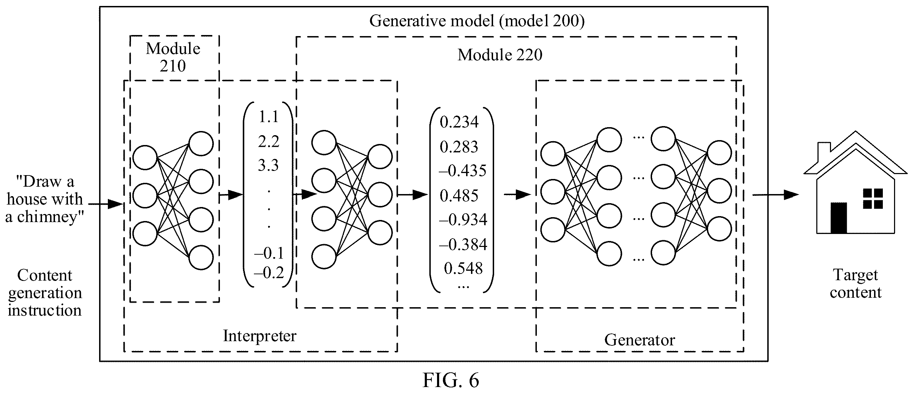

In an example, with reference to FIG. 6, the generative model used as the model 200 includes an interpreter and a generator. The interpreter may include a plurality of network layers, and the plurality of network layers are sequentially arranged in a data transfer direction of the generative model. A first network layer in the interpreter may be deployed on the user end, and is used as the module 210. A second network layer in the interpreter and the generator may be deployed on the cloud, and are used as the module 220. The first network layer is at least one of the plurality of network layers that are included in the interpreter, and the second network layer is a network layer other than the first network layer in the plurality of network layers. An output of the first network layer is an input of the second network layer. When the first network layer includes two or more network layers, the output of the first network layer is an output of a last network layer that is in the data transfer direction and that is in the two or more network layers. When the second network layer includes two or more network layers, the input of the second network layer is an input of a 1^{st} network layer that is in the data transfer direction and that is in the two or more network layers.

The first network layer used as the module 210 may extract a feature of the intention of the user, to obtain an intermediate feature vector of the user intention. The intermediate feature vector of the intention of the user may also be referred to as an intermediate interpretation result vector. The module 210 may output the intermediate interpretation result vector. The intermediate interpretation result vector is used as the intermediate result obtained in step 402. The intermediate interpretation result vector is an encoded vector, and is specifically an encoded vector output by the first network layer.

In this example, the module 210 deployed on the user end is a partial interpreter, and a part of an interpretation process of the content generation instruction can be completed on the user end. The remaining part of the interpretation process and an entire content generation process are performed on the cloud. In this way, a requirement on computing power on the user end can be reduced. For example, it may be specified that the interpreter is a 100-layer neural network. The module 210 may include the first 50 layers of the neural network, and the last 50 layers of the neural network and the generator are deployed on the cloud. In this case, only data processing of the first 50 layers needs to be performed on the content generation instruction on the user end, so that the requirement on the computing power on the user end is low.

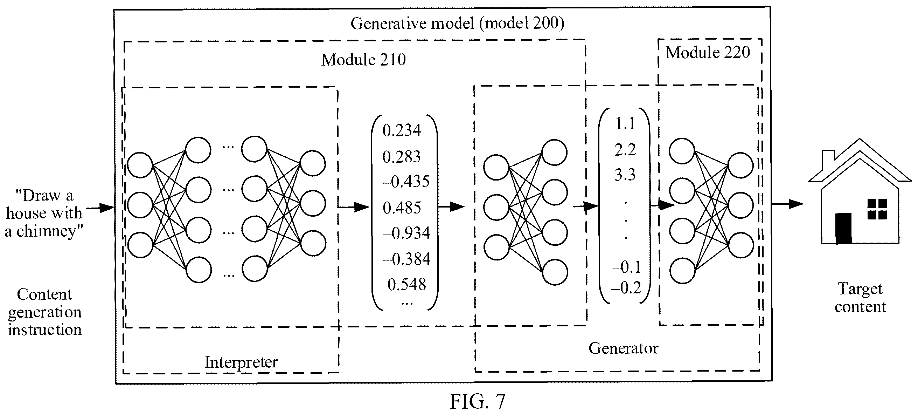

In an example, with reference to FIG. 7, the generative model used as the model 200 includes an interpreter and a generator. The generator may include a plurality of network layers, and the plurality of network layers are sequentially arranged in a data transfer direction of the generative model. A third network layer in the generator and the interpreter may be deployed on the user end, and are used as the module 210. A fourth network layer in the generator may be deployed on the cloud, and is used as the module 220. The third network layer is at least one of the plurality of network layers that are included in the generator, and the fourth network layer is a network layer other than the third network layer in the plurality of network layers. An output of the third network layer is an input of the fourth network layer. When the third network layer includes two or more network layers, the output of the third network layer is an output of a last network layer that is in the data transfer direction and that is in the two or more network layers. When the fourth network layer includes two or more network layers, the input of the fourth network layer is an input of a 1^{st} network layer that is in the data transfer direction and that is in the two or more network layers.

In this example, the module 210 deployed on the user end includes the interpreter and a partial generator (that is, the third network layer). The interpreter may extract a feature of the intention of the user, to obtain a feature vector of the user intention. The partial generator may complete a part of a generation process based on the feature vector, to obtain a partial generation result. The partial generation result is used as the intermediate result obtained in step 402. A representation form of the partial generation result is also a vector, that is, the partial generation result is also an encoded vector, and is an encoded vector output by the third network layer.

In this example, the intermediate result sent from the user end to the cloud is the partial generation result. The partial generation result is obtained through a plurality of operations on the content generation instruction. It is more difficult to deduce the content generation instruction based on the partial generation result, so that leakage of sensitive information is effectively avoided.

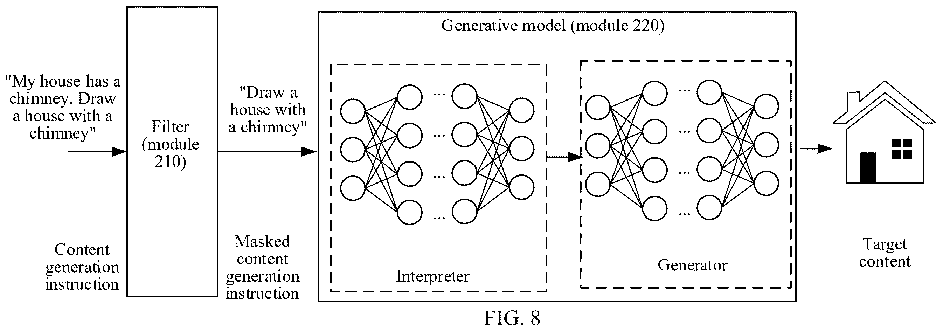

In some embodiments, as shown in FIG. 3C, the module 210 may be a filter deployed on the user end, and the module 220 is a generative model deployed on the cloud. The module 210 may also be referred to as a sensitive information filter, and is configured to intercept or filter sensitive information in the content generation instruction, to obtain a masked content generation instruction. The masked content generation instruction is used as the intermediate result obtained in step 402. In other words, the module 210 may identify sensitive information in the content generation instruction, and intercept or filter the sensitive information, so that the sensitive information does not leave the user end. For example, as shown in FIG. 8, it may be specified that the content generation instruction sent by the user is "My house has a chimney. Draw a house with a chimney". "My house has a chimney" includes personal information of the user that is sensitive information. The module 210 processes the content generation instruction to obtain a masked content generation instruction "Draw a house with a chimney", which does not include the sensitive information of the user.

In an example, the module 210 may include a trustlist or a blocklist that is set by the user. For details, refer to the foregoing descriptions. Details are not described herein again.

Refer back to FIG. 4. In step 403, a serving end 120 receives the intermediate result sent by the client 110, and inputs the intermediate result into the module 220, to enable the module 220 to output the target content.

The client 110 may send, to the serving end 120 located on the cloud over a network, the intermediate result output by the module 210. For example, the client 110 may send the intermediate result to the serving end 120 by using hypertext transfer protocol secure (hypertext transfer protocol secure, HTTPS) or another network protocol.

When receiving the intermediate result sent by the client 110, the serving end 120 may input the intermediate result into the module 220. The module 220 may obtain the target content based on the intermediate result.

When the module 210 is an interpreter, and the module 220 is a generator, the intermediate result is an interpretation result vector output by the interpreter, and the generator may generate the target content based on the interpretation result vector.

When the module 210 is a first network layer in an interpreter, and the module 220 includes a second network layer in the interpreter and a generator, the intermediate result is an intermediate interpretation result vector, the second network layer may continue to understand the content generation instruction based on the intermediate interpretation result vector, to obtain an interpretation result vector, and the generator may generate the target content based on the interpretation result vector.

When the module 210 includes a third network layer in an interpreter and a generator, and the module 220 is a fourth network layer in the generator, the intermediate result is a partial generation result, and the module 220 may continue to generate content based on the partial generation result, to obtain the target content.

When the module 210 is a filter, and the module 220 is a generative model, the intermediate result is a masked content generation instruction, and the generative model may generate the target content based on the masked content generation instruction.

After generating the target content, the module 220 may output the target content. The target content may be any one or more of a picture, a video, a text, and audio.

In step 404, the serving end 120 may send, to the client 110, the target content output by the module 220. The serving end 120 may send the target content to the client 110 by using the HTTPS or another network protocol.

The client 110 may provide the target content for the user, for example, display or play the target content, so that the user obtains the target content.

In some embodiments, the model 200 may be a generative model. The generative model is an AI model and can be obtained only through training. AI model training needs high computing power and operations of professionals. The model 200 may be trained on the cloud. In other words, training of the model 200 may be performed by a cloud vendor. The model200 may be trained via the serving end 120. After training of the model 200 is completed, in other words, after a value of a loss function (loss function) of the model 200 is small (for example, less than a specified value), the serving end 120 may obtain the module 210 in the model 200, and send the module 210 to the user end, to deploy the module 210 on the user end.

In an example, the serving end 210 may provide a display interface, and the display interface is used to display a downloadable module 210. The user may send a download request to the serving end 210 via the client 110. The serving end 210 may send the module 210 to the user end in response to the download request.

In an example, the serving end 210 may provide a configuration interface, and the configuration interface is used to configure the module 210. The user may send a configuration operation to the serving end via the client, and the configuration operation is for configuring the module 210. The serving end 210 may configure the module 210 based on the configuration operation, and send the configured module 210 to the user end. For example, the configuration operation is to use the interpreter as the module 210. The serving end 210 sends the interpreter as the module 210 to the user end based on the configuration operation. For another example, the configuration operation is to use the first network layer in the interpreter as the module 210. The serving end 210 sends the first network layer as the module 210 to the user end based on the configuration operation. For another example, the configuration operation is to use the interpreter and the third network layer in the generator as the module 210. The serving end 210 sends the interpreter and the third network layer as the module 210 to the user end based on the configuration operation.

In some embodiments, the user may adjust a parameter of the module 210. As described above, the module 210 may include at least one network layer. Each network layer includes a plurality of neurons, and each neuron performs calculation on data by using the parameter, to obtain a processing result of the layer. In this case, the user adjusts the parameter, so that the cloud or another party cannot perceive the parameter of the module 210, and it is difficult for the cloud or the another party to deduce the content generation instruction based on the intermediate result sent by the client.

The user may send a parameter adjustment operation, and the client 110 may receive the parameter adjustment operation, and adjust the parameter of the module 210 based on the parameter adjustment operation.

In an example, the user may use, via the client 110, an application like a notepad to open a file of the module 210, and directly modify the parameter of the module 210. In other words, the parameter adjustment operation sent by the user includes an operation of opening the file of the module 210 and a parameter modification operation. The client 110 may open the file of the module 210 in response to the operation of opening the file of the module 210, and modify the parameter of the module 210 in response to the parameter modification operation.

In an example, the model 200 may be retrained on the user end, and the parameter of the module 210 is changed through retraining. Specifically, the serving end 210 may send the model 200 to the user end. On the user end, iterative training may be performed on the model 200. For example, the model 200 may be iterated once or for a plurality of times, to modify the parameter of the module 210. In other words, the parameter adjustment operation sent by the user includes a retraining triggering operation and a retraining termination operation. The client 110 may retrain the model 200 in response to the retraining triggering operation, and terminate training of the model 200 in response to the retraining termination operation.

In conclusion, in the method for generating content provided in this embodiment of this application, a part of a model used to generate target content is deployed on the user end, and the other part is deployed on the cloud. The part deployed on the user end may perform processing such as data masking on the content generation instruction, to obtain an intermediate result that is difficult to be used to deduce the content generation instruction. Then, the intermediate result is sent to the cloud, to enable the cloud to generate the target content based on the intermediate result. In this way, leakage of sensitive information in the content generation instruction is avoided while there is no need to run the whole model on the user end.

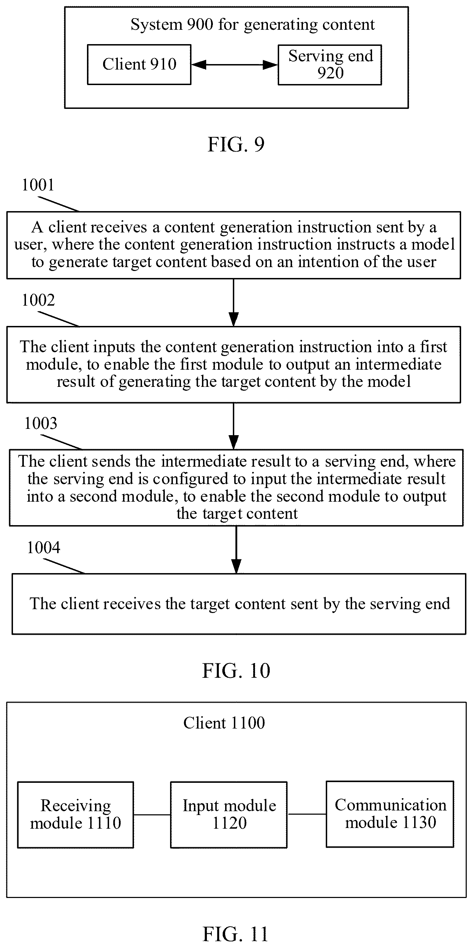

Based on the content described above, an embodiment of this application provides a system 900 for generating content. The system 900 is configured to generate content by using a model. As shown in FIG. 9, the system 900 includes a client 910 and a serving end 920, the model includes a first module and a second module. The client 910 and the first module are deployed on a user end, the serving end 920 and the second module are deployed on a cloud, and an output of the first module is an input of the second module.

The client 910 is configured to receive a content generation instruction sent by a user, where the content generation instruction instructs the model to generate target content based on an intention of the user.

The client 910 is configured to input the content generation instruction into the first module, to enable the first module to output an intermediate result of generating the target content by the model.

The serving end 920 is configured to: receive the intermediate result sent by the client 910, and input the intermediate result into the second module, to enable the second module to output the target content.

The serving end 920 is configured to send the target content to the client 910.

In some embodiments, the model is a generative model including a plurality of network layers, and the plurality of network layers are sequentially arranged in a data transfer direction of the generative model, where the first module includes at least one of the plurality of network layers, and the second module includes a network layer other than the at least one network layer in the plurality of network layers.

In some embodiments, the content generation instruction includes the intention of the user, and the model includes an interpreter and a generator. The interpreter is configured to extract a feature of the intention of the user, to obtain an encoded vector, and the generator is configured to generate the target content based on the encoded vector. The first module includes the interpreter, and the second module includes the generator. Alternatively, the first module includes a first network layer in the interpreter, and the second module includes a second network layer in the interpreter and the generator, where an output of the first network layer is an input of the second network layer. Alternatively, the first module includes the interpreter and a third network layer in the generator, and the second module includes a fourth network layer in the generator, where an output of the third network layer is an input of the fourth network layer.

In some embodiments, the model is the generative model, and the serving end 920 is further configured to: train the model, and send the first module to the user end after training of the model is completed.

In some embodiments, the client 910 is further configured to: receive a parameter adjustment operation sent by the user, and adjust a parameter of the first module based on the parameter adjustment operation.

In some embodiments, the first module includes a sensitive information filter that is set by the user, and the filter is configured to intercept sensitive information in the content generation instruction, to obtain the intermediate result.

Both the client 910 and the serving end 920 may be implemented by using software, or may be implemented by using hardware. For example, the following describes an implementation of the client 910. Similarly, for an implementation of the serving end 920, refer to the implementation of the client 910.

An apparatus is used as an example of a software functional unit, and the client 910 may include code run on a computing instance. The computing instance may be at least one of the following computing devices: a physical host (computing device), a virtual machine, a container, and the like. Further, there may be one or more computing devices. For example, the client 910 may include code run on a plurality of hosts/virtual machines/containers. It should be noted that the plurality of hosts/virtual machines/containers configured to run the code may be distributed in a same region (region), or may be distributed in different regions. The plurality of hosts/virtual machines/containers configured to run the code may be distributed in a same availability zone (availability zone, AZ), or may be distributed in different AZs. Each AZ includes one data center or a plurality of data centers that are geographically close to each other. One region may usually include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is disposed in one region. A communication gateway needs to be disposed on each VPC for cross-region communication between two VPCs in a same region and between VPCs in different regions. Interconnection between the VPCs is implemented through the communication gateway.

An apparatus is used as an example of a hardware functional unit, and the client 910 may include at least one computing device, for example, a server or a terminal. Alternatively, the client 910 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field programmable gate array (field programmable gate array, FPGA), generic array logic (generic array logic, GAL), or any combination thereof.

A plurality of computing devices included in the client 910 may be distributed in a same region, or may be distributed in different regions. The plurality of computing devices included in the client 910 may be distributed in a same AZ, or may be distributed in different AZs. Similarly, the plurality of computing devices included in the client 910 may be distributed on a same VPC, or may be distributed on a plurality of VPCs. The plurality of computing devices may be any combination of the following computing devices: a server, an ASIC, a PLD, a CPLD, an FPGA, GAL, and the like.

Based on the content described above, an embodiment of this application provides a method for generating content by using a model. The method may be applied to a client deployed on a user end. A system for generating content in which the client is located further includes a serving end deployed on a cloud, and the model includes a first module and a second module. The first module is deployed on the user end, the second module is deployed on the cloud, and an output of the first module is an input of the second module. As shown in FIG. 10, the method includes the following steps.

Step 1001: The client receives a content generation instruction sent by a user, where the content generation instruction instructs the model to generate target content based on an intention of the user.

Step 1002: The client inputs the content generation instruction into the first module, to enable the first module to output an intermediate result of generating the target content by the model.

Step 1003: The client sends the intermediate result to the serving end, where the serving end is configured to input the intermediate result into the second module, to enable the second module to output the target content.

Step 1004: The client receives the target content sent by the serving end.

In some embodiments, the method further includes: The client receives a parameter adjustment operation sent by the user, and adjusts a parameter of the first module based on the parameter adjustment operation.

With reference to FIG. 11, an embodiment of this application further provides a client 1100 for generating content by using a model. The client 1100 is deployed on a user end. A system for generating content in which the client 1100 is located further includes a serving end deployed on a cloud, and the model includes a first module and a second module. The first module is deployed on the user end, the second module is deployed on the cloud, and an output of the first module is an input of the second module. The client 1100 includes:
a receiving module 1110, configured to receive a content generation instruction sent by a user, where the content generation instruction instructs the model to generate target content based on an intention of the user;
an input module 1120, configured to input the content generation instruction into the first module, to enable the first module to output an intermediate result of generating the target content by the model; and
a communication module 1130, configured to send the intermediate result to the serving end, where the serving end is configured to input the intermediate result into the second module, to enable the second module to output the target content.

The communication module 1130 is further configured to receive the target content sent by the serving end.

All of the receiving module 1110, the input module 1120, and the communication module 1130 may be implemented by using software, or may be implemented by using hardware. For example, the following uses the receiving module 1110 as an example to describe an implementation of the receiving module 1110. Similarly, for implementations of the input module 1120 and the communication module 1130, refer to the implementation of the receiving module 1110.

A module is used as an example of a software functional unit, and the receiving module 1110 may include code run on a computing instance. The computing instance may include at least one of a physical host (computing device), a virtual machine, and a container. Further, there may be one or more computing instances. For example, the receiving module 1110 may include code run on a plurality of hosts/virtual machines/containers. It should be noted that the plurality of hosts/virtual machines/containers configured to run the code may be distributed in a same region, or may be distributed in different regions. Further, the plurality of hosts/virtual machines/containers configured to run the code may be distributed in a same AZ, or may be distributed in different AZs. Each AZ includes one data center or a plurality of data centers that are geographically close to each other. One region may usually include a plurality of AZs.

Similarly, the plurality of hosts/virtual machines/containers configured to run the code may be distributed on a same VPC or may be distributed on a plurality of VPCs. Usually, one VPC is disposed in one region. A communication gateway needs to be disposed on each VPC for cross-region communication between two VPCs on a same region and between VPCs in different regions. Interconnection between the VPCs is implemented through the communication gateway.

A module is used as an example of a hardware functional unit, and the receiving module 1110 may include at least one computing device, for example, a server. Alternatively, the receiving module 1110 may be a device implemented by using an ASIC or a programmable logic device PLD. The PLD may be implemented by using a CPLD, an FPGA, GAL, or any combination thereof.

A plurality of computing devices included in the receiving module 1110 may be distributed in a same region, or may be distributed in different regions. The plurality of computing devices included in the receiving module 1110 may be distributed in a same AZ, or may be distributed in different AZs. Similarly, the plurality of computing devices included in the receiving module 1110 may be distributed in a same VPC, or may be distributed in a plurality of VPCs. The plurality of computing devices may be any combination of the following computing devices: a server, an ASIC, a PLD, a CPLD, an FPGA, GAL, and the like.

It should be noted that, in another embodiment, the receiving module 1110 may be configured to perform any step in the method shown in FIG. 10, the input module 1120 may be configured to perform any step in the method shown in FIG. 10, and the communication module 1130 may be configured to perform any step in the method shown in FIG. 10. Steps that the receiving module 1110, the input module 1120, and the communication module 1130 are responsible for implementing may be specified based on a requirement, and all functions of the client 1100 are implemented by the receiving module 1110, the input module 1120, and the communication module 1130 implementing different steps in the method shown in FIG. 10.

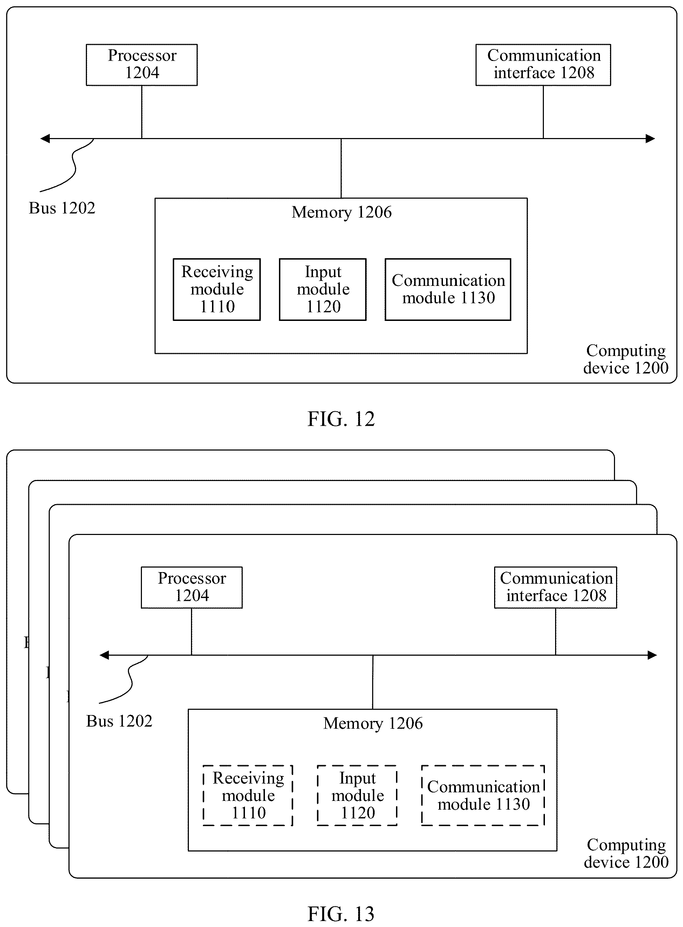

This application further provides a computing device 1200. As shown in FIG. 12, the computing device 1200 includes a bus 1202, a processor 1204, a memory 1206, and a communication interface 1208. The processor 1204, the memory 1206, and the communication interface 1208 communicate with each other through the bus 1202. The computing device 1200 may be a server or a terminal device. It should be understood that quantities of processors and memories in the computing device 1200 are not limited in this application.

The bus 1202 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used in FIG. 12 for representation, but it does not indicate that there is only one bus or only one type of bus. The bus 1202 may include a path for information transmission between components (for example, the memory 1206, the processor 1204, and the communication interface 1208) of the computing device 1200.

The processor 1204 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1206 may include a volatile memory (volatile memory), for example, a random access memory (random access memory, RAM). The memory 1206 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1206 stores executable program code, and the processor 1204 executes the executable program code to separately implement functions of the foregoing receiving module 1110, the foregoing input module 1120, and the foregoing communication module 1130, to implement the method shown in FIG. 10. In other words, the memory 1206 stores instructions for performing the method shown in FIG. 10.

The communication interface 1208 is a transceiver module, for example, but not limited to, a network interface card or a transceiver, to implement communication between the computing device 1200 and another device or a communication network.

An embodiment of this application further provides a computing device cluster. The computing device cluster includes at least one computing device. The computing device may be a server, for example, an edge server, or a local server in a local data center. In some embodiments, the computing device may alternatively be a terminal device, for example, a desktop computer, a notebook computer, or a smartphone.

As shown in FIG. 13, the computing device cluster includes at least one computing device 1200. Memories 1206 in one or more computing devices 1200 in the computing device cluster may store same instructions for performing the method shown in FIG. 10.

In some possible implementations, the memories 1206 in the one or more computing devices 1200 in the computing device cluster may alternatively separately store a part of instructions for performing the method shown in FIG. 10. In other words, a combination of the one or more computing devices 1200 may jointly execute the instructions for performing the method shown in FIG. 10.

It should be noted that memories 1206 in different computing devices 1200 in the computing device cluster may store different instructions for performing a part of functions of the client 1100. In other words, the instructions stored in the memories 1206 in the different computing devices 1200 may implement functions of one or more modules in a receiving module 1110, an input module 1120, and a communication module 1130.

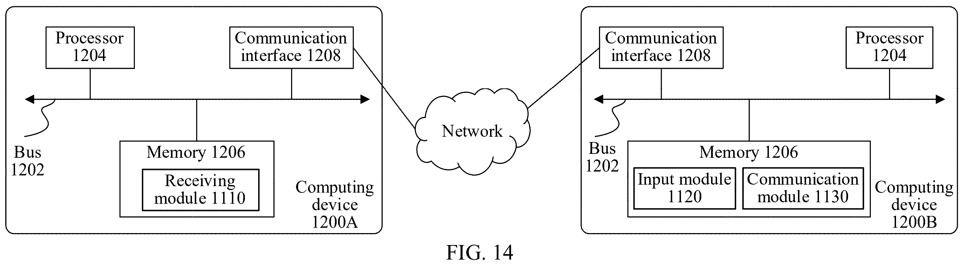

In some possible implementations, the one or more computing devices in the computing device cluster may be connected over a network. The network may be a wide area network, a local area network, or the like. FIG. 14 shows a possible implementation. As shown in FIG. 14, two computing devices 1200A and 1200B are connected over a network. Specifically, each computing device is connected to the network through a communication interface in the computing device. In this possible implementation, a memory 1206 in the computing device 1200A stores instructions for performing functions of the receiving module 1110. In addition, a memory 1206 in the computing device 1200B stores instructions for performing functions of the input module 1120 and the communication module 1130.

It should be understood that functions of the computing device 1200A shown in FIG. 14 may alternatively be completed by the plurality of computing devices 1200. Similarly, functions of the computing device 1200B may alternatively be completed by the plurality of computing devices 1200.

An embodiment of this application further provides another computing device cluster. For a connection relationship between computing devices in the computing device cluster, refer to the similar connection manners of the computing device cluster in FIG. 13 and FIG. 14. A difference lies in that memories 1206 in one or more computing devices 1200 in the computing device cluster may store same instructions for performing the method shown in FIG. 10.

In some possible implementations, the memories 1206 in the one or more computing devices 1200 in the computing device cluster may alternatively separately store a part of instructions for performing the method shown in FIG. 10. In other words, a combination of the one or more computing devices 1200 may jointly execute the instructions for performing the method shown in FIG. 10.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform the method shown in FIG. 10.

An embodiment of this application further provides a computer-readable storage medium. The computer-readable storage medium may be any usable medium that can be stored on a computing device, or a host migration device, for example, a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the method shown in FIG. 10.

Finally, it should be noted that, the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof. However, the modifications and replacements do not cause the essence of corresponding technical solutions to depart from the protection scope of the technical solutions in embodiments of this application.

## Claims

1. A method for generating content by using a model, applied to a system for generating content, wherein the system comprises a client and a serving end, and the model comprises a first module and a second module, wherein the client and the first module are deployed on a user end, the serving end and the second module are deployed on a cloud, and an output of the first module is an input of the second module; and the method comprises:
receiving, by the client, a content generation instruction sent by a user, wherein the content generation instruction instructs the model to generate target content based on an intention of the user;
inputting, by the client, the content generation instruction into the first module, to enable the first module to output an intermediate result of generating the target content by the model;
receiving, by the serving end, the intermediate result sent by the client, and inputting the intermediate result into the second module, to enable the second module to output the target content; and
sending, by the serving end, the target content to the client.

2. The method according to claim 1, wherein the model is a generative model comprising a plurality of network layers, and the plurality of network layers are sequentially arranged in a data transfer direction of the generative model, wherein the first module comprises at least one of the plurality of network layers, and the second module comprises a network layer other than the at least one network layer in the plurality of network layers.

3. The method according to claim 1 or 2, wherein the content generation instruction comprises the intention of the user, the model comprises an interpreter and a generator, the interpreter is configured to extract a feature of the intention of the user, to obtain an encoded vector, and the generator is configured to generate the target content based on the encoded vector, wherein
the first module comprises the interpreter, and the second module comprises the generator; or the first module comprises a first network layer in the interpreter, and the second module comprises a second network layer in the interpreter and the generator, wherein an output of the first network layer is an input of the second network layer; or
the first module comprises the interpreter and a third network layer in the generator, and the second module comprises a fourth network layer in the generator, wherein an output of the third network layer is an input of the fourth network layer.

4. The method according to any one of claims 1 to 3, wherein the model is the generative model, and the method further comprises:
training, by the serving end, the model; and
sending, by the serving end, the first module to the user end after training of the model is completed.

5. The method according to any one of claims 1 to 4, wherein the method further comprises: receiving, by the client, a parameter adjustment operation sent by the user, and adjusting a parameter of the first module based on the parameter adjustment operation.

6. The method according to claim 1, wherein the first module comprises a sensitive information filter that is set by the user, and the filter is configured to intercept sensitive information in the content generation instruction, to obtain the intermediate result.

7. A system for generating content, wherein the system is configured to generate content by using a model, the system comprises a client and a serving end, and the model comprises a first module and a second module, wherein the client and the first module are deployed on a user end, the serving end and the second module are deployed on a cloud, and an output of the first module is an input of the second module;
the client is configured to receive a content generation instruction sent by a user, wherein the content generation instruction instructs the model to generate target content based on an intention of the user;
the client is configured to input the content generation instruction into the first module, to enable the first module to output an intermediate result of generating the target content by the model;
the serving end is configured to: receive the intermediate result sent by the client, and input the intermediate result into the second module, to enable the second module to output the target content; and
the serving end is configured to send the target content to the client.

8. The system according to claim 7, wherein the model is a generative model comprising a plurality of network layers, and the plurality of network layers are sequentially arranged in a data transfer direction of the generative model, wherein the first module comprises at least one of the plurality of network layers, and the second module comprises a network layer other than the at least one network layer in the plurality of network layers.

9. The system according to claim 7 or 8, wherein the content generation instruction comprises the intention of the user, the model comprises an interpreter and a generator, the interpreter is configured to extract a feature of the intention of the user, to obtain an encoded vector, and the generator is configured to generate the target content based on the encoded vector, wherein
the first module comprises the interpreter, and the second module comprises the generator; or
the first module comprises a first network layer in the interpreter, and the second module comprises a second network layer in the interpreter and the generator, wherein an output of the first network layer is an input of the second network layer; or
the first module comprises the interpreter and a third network layer in the generator, and the second module comprises a fourth network layer in the generator, wherein an output of the third network layer is an input of the fourth network layer.

10. The system according to any one of claims 7 to 9, wherein the model is the generative model, and the serving end is further configured to:
train the model; and
send the first module to the user end after training of the model is completed.

11. The system according to any one of claims 7 to 10, wherein the client is further configured to: receive a parameter adjustment operation sent by the user, and adjust a parameter of the first module based on the parameter adjustment operation.

12. The system according to claim 7, wherein the first module comprises a sensitive information filter that is set by the user, and the filter is configured to intercept sensitive information in the content generation instruction, to obtain the intermediate result.

13. A method for generating content by using a model, applied to a client deployed on a user end, wherein a system for generating content in which the client is located further comprises a serving end deployed on a cloud, and the model comprises a first module and a second module, wherein the first module is deployed on the user end, the second module is deployed on the cloud, and an output of the first module is an input of the second module; and the method comprises:
receiving, by the client, a content generation instruction sent by a user, wherein the content generation instruction instructs the model to generate target content based on an intention of the user;
inputting, by the client, the content generation instruction into the first module, to enable the first module to output an intermediate result of generating the target content by the model;
sending, by the client, the intermediate result to the serving end, wherein the serving end is configured to input the intermediate result into the second module, to enable the second module to output the target content; and
receiving, by the client, the target content sent by the serving end.

14. The method according to claim 13, wherein the method further comprises: receiving, by the client, a parameter adjustment operation sent by the user, and adjusting a parameter of the first module based on the parameter adjustment operation.

15. A client for generating content by using a model, wherein the client is deployed on a user end, a system for generating content in which the client is located further comprises a serving end deployed on a cloud, and the model comprises a first module and a second module, wherein the first module is deployed on the user end, the second module is deployed on the cloud, and an output of the first module is an input of the second module; and the client comprises:
a receiving module, configured to receive a content generation instruction sent by a user, wherein the content generation instruction instructs the model to generate target content based on an intention of the user;
an input module, configured to input the content generation instruction into the first module, to enable the first module to output an intermediate result of generating the target content by the model; and
a communication module, configured to send the intermediate result to the serving end, wherein the serving end is configured to input the intermediate result into the second module, to enable the second module to output the target content, wherein
the communication module is further configured to receive the target content sent by the serving end.

16. The client according to claim 15, wherein the receiving module is further configured to: receive a parameter adjustment operation sent by the user, and adjust a parameter of the first module based on the parameter adjustment operation.

17. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to claim 13 or 14.

18. A computer program product comprising instructions, wherein when the instructions are run by a computing device cluster, the computing device cluster is enabled to perform the method according to claim 13 or 14.

19. A computer-readable storage medium, comprising computer program instructions, wherein when the computer program instructions are executed by a computing device cluster, the computing device cluster performs the method according to claim 13 or 14.
